(19) **Europäisches Patentamt**

**European Patent Office**

**Office européen des brevets**

(11) **EP 0 935 907 B1**

(12) **EUROPÄISCHE PATENTSCHRIFT**

(45) Veröffentlichungstag und Bekanntmachung des Hinweises auf die Patenterteilung:
**26.02.2003 Patentblatt 2003/09**

(51) Int Cl.⁷: **H04Q 11/04**, H04L 12/56

(21) Anmeldenummer: **97912043.3**

(22) Anmeldetag: **07.10.1997**

(86) Internationale Anmeldenummer:
**PCT/DE97/02295**

(87) Internationale Veröffentlichungsnummer:
**WO 98/019494 (07.05.1998 Gazette 1998/18)**

(54) **VERFAHREN ZUR WEITERLEITUNG MIT WÄHLBARER GRANULARITÄT DER RATE VON ASYNCHRON ÜBERTRAGENEN NACHRICHTENZELLEN**

METHOD FOR ROUTING ASYNCHRONOUSLY TRANSFERRED MESSAGE CELL RATES WITH SELECTIVE GRANULARITY

PROCEDE POUR LA TRANSMISSION, AVEC UNE GRANULARITE SELECTIONNABLE DU DEBIT, D'ELEMENTS DE MESSAGES TRANSMIS EN MODE ASYNCHRONE

(84) Benannte Vertragsstaaten:
**BE CH DE ES FR GB IT LI NL**

(30) Priorität: **31.10.1996 DE 19644099**

(43) Veröffentlichungstag der Anmeldung:
**18.08.1999 Patentblatt 1999/33**

(73) Patentinhaber: **Infineon Technologies AG**
**81669 München (DE)**

(72) Erfinder: **STEMPLINGER, Robert**
**D-81377 München (DE)**

(74) Vertreter: **Reinhard - Skuhra - Weise & Partner**
**Friedrichstrasse 31**
**80801 München (DE)**

(56) Entgegenhaltungen:
**EP-A- 0 710 046            US-A- 5 570 360**

- **PANCHA P ET AL: "GUARANTEEING BANDWIDTH AND MINIMIZING DELAY IN PACKET-SWITCHED (ATM) NETWORKS" GLOBECOM '95. IEEE GLOBAL TELECOMMUNICATIONS CONFERENCE, SINGAPORE, NOV. 14 - 16, 1995, Bd. 2, 14.November 1995, INSTITUTE OF ELECTRICAL AND ELECTRONICS ENGINEERS, Seiten 1064-1070, XP000622955**

**Beschreibung**

Der Anmeldungsgegenstand betrifft ein Verfahren zur Weiterleitung mit wählbarer Granularität der Rate von asynchron übertragenen Nachrichtenzellen umfassend die Merkmale des Anspruchs 1.

Ganz allgemein ist es gebräuchlich, einen Anteil mit Hilfe eines als Teiler verwendeten Zählers zu bestimmen. Im Hinblick auf die Zuteilung einer vereinbarten Nachrichtenzellenrate für einen Block an der gesamten zur Verfügung stehenden Nachrichtenzellenrate einer nachfolgenden Schnittstelle wird es als naheliegend angesehen, einen Zähler einzusetzen, der im Takt der Nachrichtenzellenrate getaktet wird und der bei Erreichen eines der vereinbarten Nachrichtenzellenrate für den Block entsprechenden Zählerstandes ein Zustandszeichen zur Weiterleitung einer Nachrichtenzelle abgibt. Hierbei macht es sich störend bemerkbar, daß mit Zunahme der vereinbarten Nachrichtenzellenrate die einstellbare Schrittweite, die in Fachkreisen auch als Granularität bezeichnet wird, (Teilerverhältnis 1,2,3,4...) zunehmend grober wird.

Aus der EP 0710046 ist ein ATM cell scheduler bekannt, bei dem für jeden aus Nachrichtenzellen (cells) bestehenden Datenstrom eine gesonderte Warteschlange vorgesehen ist. Zur Weiterleitung der Datenströme mit unterschiedlichen Ratenparametern weist dieser scheduler mehrere Scheiben (timing wheel) mit Segmenten zur Aufnahme der Nachrichtenzellen auf, wobei die Scheiben für unterschiedliche Bereiche der Ratenparameter vorgesehen sind und nach Maßgabe eines zugehörigen Zählers mit unterschiedlicher Rate rotieren. Der Problematik der Abweichung der Granularität in Abhängigkeit vom Verhältnis der vereinbarten Nachrichtenzellenrate zur insgesamt zur Verfügung stehenden Nachrichtenzellenrate wird bei diesem Lösungsansatz durch mehrere timing wheels, die mit Taktsignalen unterschiedlicher Frequenz betriebenen Zählern angesteuert sind, begegnet.

Aus der US 5570360 ist eine digitale Weiterleitungseinrichtung (switch) bekannt, bei der für die Nachrichtenzellen jeder virtuellen Verbindung eine gesonderte Warteschlange vorgesehen ist, wobei für eine Nachrichtenzelle, die in Übereinstimmung mit dem minimalen vereinbarten Ratenparameter eintrifft, jedenfalls eine Nachrichtenzelle aus der zugehörigen Warteschlange weitergeleitet wird.

Dem Anmeldungsgegenstand liegt das Problem zugrunde, ein Verfahren anzugeben, bei dem auch bei großen Teilverhältnissen der vereinbarten Nachrichtenzellenrate an der gesamten Nachrichtenzellenrate unter Verwendung eines Taktsignales nur einer Frequenz eine vorgegebene Schrittweite eingehalten werden kann.

Das Problem wird durch ein Verfahren mit den Merkmalen des Anspruchs 1 gelöst.

Der Anmeldungsgegenstand bringt auch bei einem großen Anteil der vereinbarten Nachrichtenzellenrate für einen Block an der gesamten Nachrichtenzellenrate eine enge Anpassbarkeit der Nachrichtenzellenrate, mit der der Block tatsächlich bedient wird, an die vereinbarte Nachrichtenzellenrate mit sich.

Der Anmeldungsgegenstand wird im folgenden in einem zum Verständnis erforderlichen Umfang als Ausführungsbeispiel anhand von Figuren näher beschrieben.

Dabei zeigen:

FIG 1 eine prinzipielle Darstellung einer Anordnung zur Behandlung von Nachrichtenzellen,

FIG 2 nähere Einzelheiten der in FIG 1 mit SBS bezeichneten Einheit,

FIG 3 nähere Einzelheiten der in FIG 1 mit FD bezeichneten Einheit,

FIG 4 eine weitere Ausgestaltung der Einheit FD,

FIG 5 eine weitere Ausgestaltung der Einheit FD und

FIG 6 eine weitere Ausgestaltung der Einheit FD.

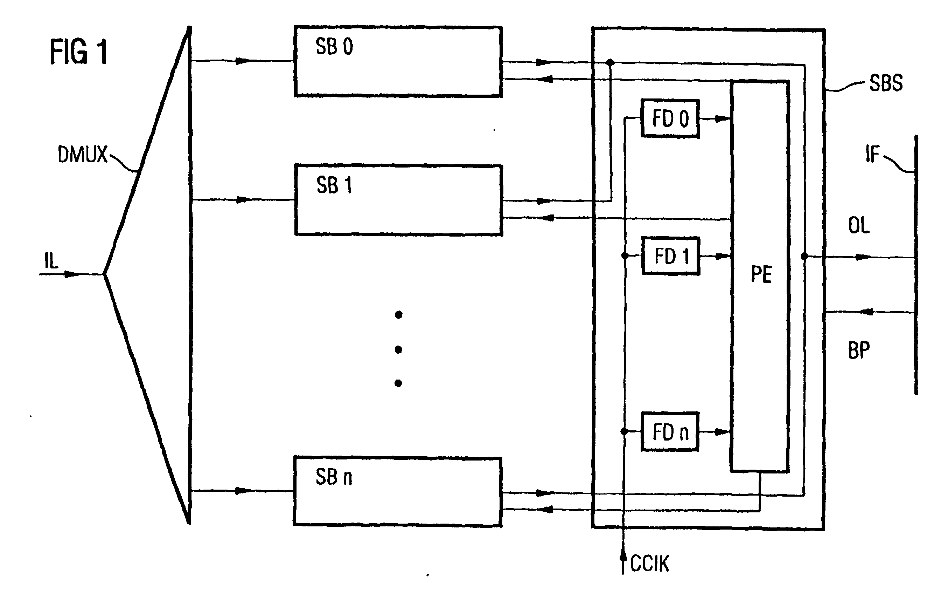

Bei der Weiterleitungseinrichtung nach FIG 1 sind Nachrichtenzellen, die zur Weiterleitung über eine Ausgangsleitung OL (für: Output Line) bestimmt sind, in Blöcken SBO.. Sbn, beispielsweise 64 Blöcke, als Warteschlangen organisiert zwischengespeichert. Die Nachrichtenzellen weisen feste Länge auf und werden nach einem asynchronen Übertragungsverfahren, insbesondere dem ATM (Asynchrones Transfer Mode)-Übertragungsverfahren im Zuge von virtuellen Verbindungen weitergeleitet. Die einem jeweiligen Block zugeführten Nachrichtenzellen mögen auf einer Eingangsleitung IL (für: Input Line) herangeführt und in einer Verteileinrichtung DMUX (für: Demultiplexer) nach Maßgabe der zugehörigen virtuellen Verbindung einem jeweiligen Block zugeführt sein. Eine Zuteilungseinrichtung SBS (für: Scheduler Block Scheduler) teilt den Blöcken Berechtigungen zur Weiterleitung jeweils einer Nachrichtenzelle an eine Schnittstelle IF (für: Interface) zu.

Die Zeitspanne $T_{cell}$, während der eine weitergeleitete Nachrichtenzelle eine Leitung belegt, legt einen Nachrichtenzellenzyklus fest. Ein Nachrichtenzellenzyklus gleicht einer Periode eines Nachrichtenzellentaktes CClk (für: Cell Clock). Die Zuteilungseinrichtung bestimmt für jeden Nachrichtenzellenzyklus, welcher Block eine Nachrichtenzelle weiterleitet. Die Zuteilungseinrichtung weist für jeden Block einen Zähler FD0..FDn auf. Den Zählern ist eingangsseitig der Nachrichtenzellentakt zugeführt. Die Zähler geben bei Erreichen eines Zählerstandes, der der für den zugehörigen Block vereinbarten Nachrichtenzellenrate entspricht, ein Zustandszeichen an eine Priorisierungseinrichtung PE (für: Priority Encoder) ab. Die Priorisierungeinrichtung wählt unter den Blöcken, für die gerade ein Zustandzeichen gesetzt ist, nach Maßgabe der den einzelnen Blöcken zugeordneten Prioritäten einen Block aus und teilt ihm eine Berechtigung zur Weiterleitung einer Nachrichtenzelle zu. Die Priorisierungseinrichtung mag jeden Nachrichtenzellenzyklus die Zähler auf gesetzte Zustandszeichen nach einem in Fachkreisen als Round-Robin-Mechanismus bezeichneten Mechanismus absuchen.

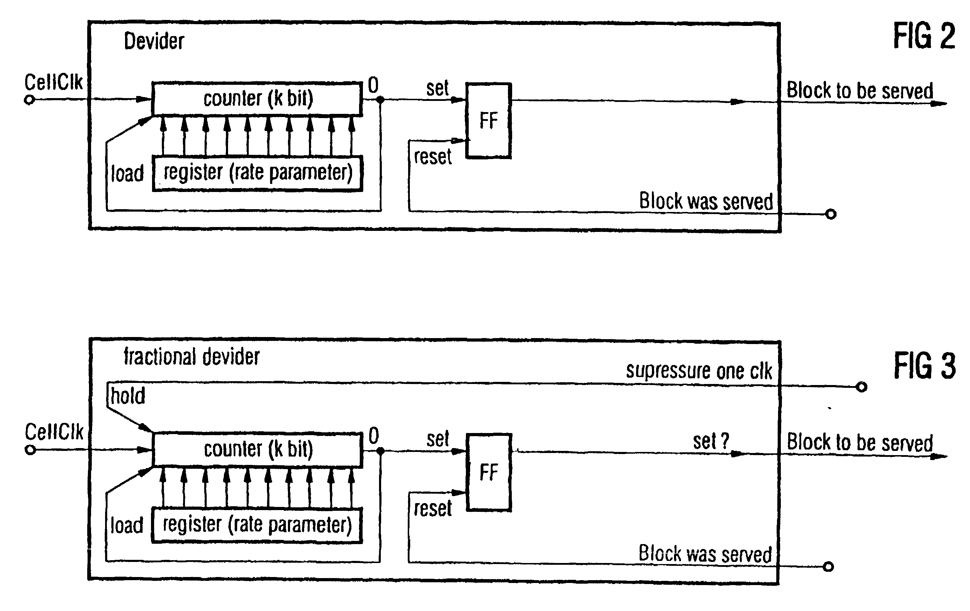

Der Zähler nach FIG 2 soll eine vorgegebene Nachrichtenzellenrate einstellen können. Dazu wird der Nachrichtenzellentakt mittels eines Ratenzählers (counter k bit) durch einen vorgegebenen Wert geteilt. Die Größe dieses Teilers wird vorgegebenen durch die minimal einzustellende Nachrichtenzellenrate $R_{min}$. Im Register (rate parameter) ist der Ratenparameter $T_{serv}$ = 1 ./. $R_{serv}$ abgelegt. Der Ratenzähler wird mit $R_{serv}$ geladen und vermindert seinen Zählerwert mit jedem Nachrichtenzellenzyklus um 1. Erreicht der Zählerstand den Wert 0, wird der Zähler erneut geladen und am Ausgang eines Flip Flops FF ein Zustandszeichen (Flag) gesetzt, um anzuzeigen, daß eine Nachrichtenzelle aus dem zugehörigen Block gelesen werden kann. Wenn eine Nachrichtenzelle für diesen Block ausgelesen wurde, wird dieses Flag zurückgesetzt. Die Nachrichtenzellenrate (service rate) ergibt sich durch $R_{serv}$ = 1/($T_{serv}$ x $T_{cell}$).

Bei zunehmenden Nachrichtenzellenraten ist die einstellbare Schrittweite, die in Fachkreisen auch als Granularität bezeichnet wird, (Teilerverhältnis 1,2,3,4...) zunehmend grober.

Für den fractional devider nach FIG 3 werden zwei Variablen gespeichert:

$T_{serv}$frac: fractional Anteil des Ratenparameters (z bits)

$N_{serv}$frac: momentaner Summe des Fractional Anteils (z bits)

$T_{serv}$count: integer (Zähler) Anteil des Ratenparameters (k bits)

$N_{serv}$count: momentaner Zählerstand (k bits)

Die Berechnung des fractionalen Anteils erfolgt entweder lokal im entsprechenden Block jeweils bei Ablauf des Zählers oder einmal zentral (Variablen in Tabellen) jeweils beim Auslesen aus diesem Block.

Der Algorithmus lautet wie folgt:
if ($N_{serv}$Count = 0 / block was served) then
    $N_{serv}$frac = $N_{serv}$frac + $T_{serv}$frac modulo 2^z
    if (overflow of $N_{serv}$frac) then
        set Flag 'supressure one clk'

Im nächsten Nachrichtenzellzyklus wird das Zustandszeichen Flag zurückgesetzt und die Zählung für diesen Nachrichtenzellzyklus unterbrochen. Die Rate ergibt sich somit zu:

$$R_{serv} = 1 / [(T_{serv}count + T_{serv}frac)*T_{cell})]$$

$$z = ld [1 / (Granularität (z.B 1\%))]$$

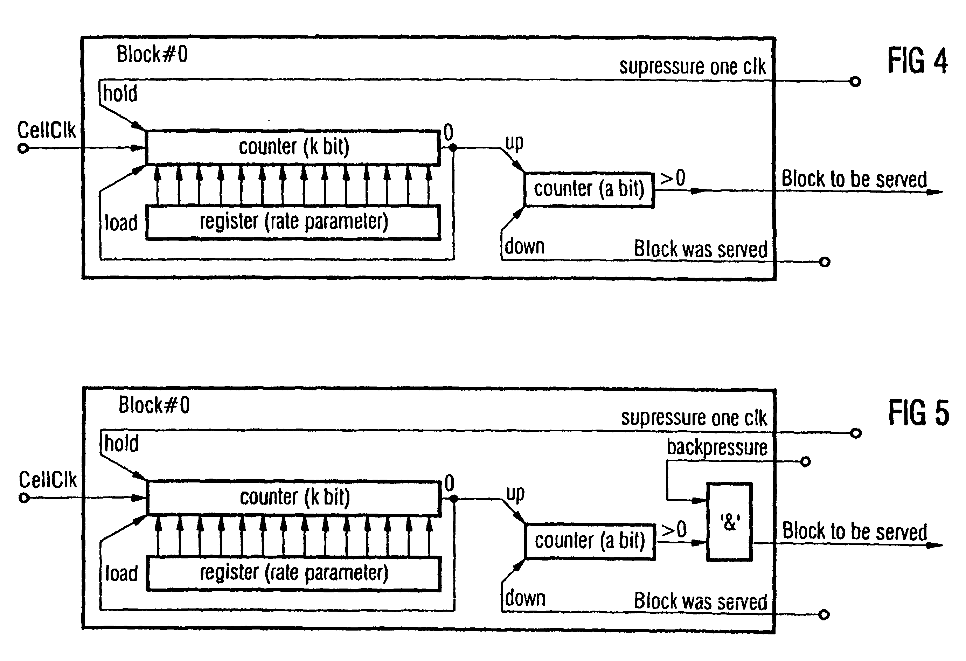

Sämtliche Zähler laufen unabhängig voneinander parallel. Mehrere Zähler können gleichzeitig in einem Nachrichtenzellenzyklus ablaufen. Jeden Nachrichtenzellenzyklus kann jedoch nur ein Block bedient werden, so dass Zähler auch mehrfach ablaufen können, ohne dass sie bedient wurden. Daraus ergibt sich eine Verzögerung der Nachrichtenzellen (Cell Delay Variation). Für jeden Block ist die vereinbarte Nachrichtenzellenrate einzuhalten. Bei dem Zähler nach FIG 4 ist das Flip Flop aus FIG 4, das das Zustandszeichen abgibt, durch einen Ereigniszähler (counter a bit) ersetzt. Der Zählerstand dieses Ereigniszählers wird um 1 erhöht, wenn der Ratenzähler (counter k bit) abläuft. Der Zählerstand des Ereigniszählers wird um 1 erniedrigt, wenn für den zugehörigen Block eine Nachrichtenzelle ausgelesen wurde. Der Ereigniszähler kann so viele Zustände einnehmen, wie bei der Weiterleitungseinrichtung Blökke vorgesehen sind. Solange der Zählerstand des Ereigniszählers größer als 0 ist, wird ein Zustandszeichen an die Priorisierungseinrichtung abgegeben.

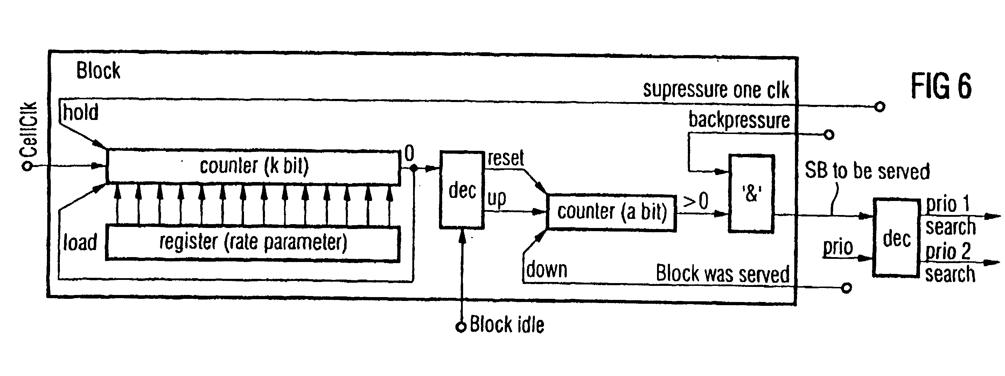

Die Schnittstelle, an die die Nachrichtenzellen weitergeleitet werden, möge durch eine standardisierte UTOPIA-Schnittstelle gegeben sein. Diese Schnittstelle unterstützt Zurückstauen von Verkehr (back pressure). Die Zuordnungseinrichtung soll auf Zurückstau-Signale der Schnittstelle reagieren können, wobei die vereinbarten Nachrichtenzellenraten dennoch eingehalten werden sollen. Einer physikalischen Schnittstelle kann ein Block (port shaping) oder mehrere Blöcke (virtuell path shaping) zugeordnet sein. Bei der Ausgestaltungsform des Anmeldungsgegenstandes nach FIG 5 ist das von dem Ereigniszähler abgegebene Zustandssignal mit dem Zurückstau-Signal der zugeordneten Schnittstelle logisch verknüpft. Ist das Zurückstau-Signal gesetzt, wird ein Zustandszeichen an die Priorisierungseinrichtung nicht abgegeben, womit eine Weiterleitung einer Nachrichtenzelle unterbleibt. Die Ablaufereignisse werden jedoch in dem Ereigniszähler gezählt, so daß Nachrichtenzellen, die während eines wirksamen Zurückstau-Signales nicht weitergeleitet wurden, in den Nachrichtenzellenzyklen, die nach Ausbleiben des wirksamen Zurückstau-Signales folgen, weitergeleitet werden, womit die vereinbarte Nachrichtenzellenrate eingehalten werden kann.

Die Weiterleitungseinrichtung teilt einer nachfolgenden Schnittstelle Nachrichtenzellen in einer Menge zu, die die maximale Datenrate der Schnittstelle berücksichtigt. Wird die Rate, mit der die Weiterleitungseinrichtung Nachrichtenzellen weiterleitet, etwas höher eingestellt, als sie der Datenrate der Schnittstelle entspricht, kann eine 100 %ige Auslastung der Schnittstelle erreicht werden, wobei durch die Zurückstau-Signale gesteuert wird.

Bei Führung von virtuellen Verbindungen, deren Nachrichtenzellen durch die Zuteilungseinrichtung behandelt sind, über eine Schnittstelle ist die Einhalten einer Auslastung der Schnittstelle zu 100% zunächst nicht gegeben.

Bei der Ausführungsform nach FIG 6 wird ein Block einem virtuellen Pfad (mit der Rate dieses virtuellen Pfads) und ein gesonderter Block für die restliche Rate der Schnittstelle zugeordnet. Der gesonderte Block erhält eine niedrigere Priorität beim Auslesealgorithmus. Gleichzeitig werden die Blöcke um eine Anzeige Block idle erweitert, ob ein betreffender Block Nachrichtenzellen enthält oder leer ist. Die Anzeige Block idle ist einer zwischen den Ratenzähler und den Ereigniszähler eingefügten Decodiereinrichtung dec zugeführt. Läuft ein Ratenzähler ab und ist der zugehörige Block leer, so wird der Ereigniszähler rückgesetzt. Es werden also nur die Blöcke bedient, die Nachrichtenzellen enthalten, womit kein Nachrichtenzellenzyklus für die Weiterleitung einer Nachrichtenzelle verlorengeht.

**Patentansprüche**

1. Verfahren zur Weiterleitung mit wählbarer Granularität der Rate von asynchron übertragenen Nachrichtenzellen demzufolge

   - für einen Block (SBS0..SBSn) ein Zähler (FD0.. FDn) gegeben ist
   - der Zähler mit einem Taktsignal (CClk), dessen Periode einem Nachrichtenzellenzyklus gleicht, arbeitet
   - ein der vereinbarten Nachrichtenzellenrate gleichender Ratenparameter einem Zählerstand entspricht
   - bei Erreichen des Zählerstandes des Zählers für den Block eine Nachrichtenzelle weitergeleitet wird
   - bei Weiterleitung einer Nachrichtenzelle der Wert einer Variablen $N_{serv}$frac um einen Wert, der gleich $T_{serv}$frac Modulo 2^z ist, erhöht wird, wobei

     • $N_{serv}$frac durch die momentane Summe des fraktionalen Anteils des Ratenparameters,
     • $T_{serv}$frac durch den fraktionalen Anteil des Ratenparameters und
     • z durch ld (Logarithmus dualis) von 1/ prozentuale Granularität

     gegeben sind
   - bei einem Überschreiten des Wertebereiches der Variablen $N_{serv}$frac eine Periode des dem Zähler zugeführten Taktsignales unterdrückt wird.

**Claims**

1. Method for passing on, with selectable granularity, the rate of asynchronously transmitted message cells, as a consequence of which:

   - a counter (FD0..FDn) is provided for a block (SBS0..SBSn)
   - the counter operates with a clock signal (CClk), whose period is equal to a message cell cycle
   - a rate parameter, which is equal to the agreed message cell rate, corresponds to a count
   - when the counter reaches the count for the block, a message cell is passed on
   - on passing on a message cell, the value of a variable $N_{serv}$frac is incremented by a value which is equal to $T_{serv}$frac Modulo 2^z, where

     • $N_{serv}$frac is given by the instantaneous sum of the fractional component of the rate parameter,
     • $T_{serv}$frac is given by the fractional component of the rate parameter and
     • z is given by ld (Logarithmus dualis) of 1/percentage granularity

   - if the variable $N_{serv}$frac exceeds the value range, one period of the clock signal which is supplied to the counter is suppressed.

**Revendications**

1. Procédé pour la transmission avec une granularité sélectionnable du débit d'éléments de messages transmis en mode asynchrone selon lequel

   - il y a un compteur (FDO..FDn) pour un bloc (SBSO..SBSn)
   - le compteur fonctionne avec un signal de synchronisation (CClk), dont la période est égale à un cycle d'éléments de messages
   - un paramètre de débit ressemblant au débit convenu d'éléments de messages correspond à une position de compteur
   - un élément de message est transmis lorsque la position du compteur est atteinte pour le bloc
   - lors de la transmission d'un élément de message, la valeur d'une variable $N_{serv}$frac est augmentée d'une valeur qui est égale à $T_{serv}$frac Modulo 2^z,

     * $T_{serv}$frac étant donné par la somme momentanée de la part fractionnaire du paramètre de débit,
     * $T_{serv}$frac étant donné par la part fractionnaire du paramètre de débit et
     * z étant donné par 1d (Logarithmus dualis) de granularité de 1/ pour-cent de granularité

- une période du signal de synchronisation amené au compteur étant supprimée dans le cas d'un dépassement de la plage de valeurs de la variable $N_{serv}$frac.

FIG 1

**FIG 2**

Devider

CellClk

counter (k bit)   0   set   FF   Block to be served

load   register (rate parameter)

reset

Block was served

**FIG 3**

fractional devider

supressure one clk

hold

CellClk

counter (k bit)   0   set   FF   set ?   Block to be served

load   register (rate parameter)

reset

Block was served

EP 0 935 907 B1

EP 0 935 907 B1

**FIG 4**

Block#0

supressure one clk

hold

CellClk

counter (k bit)    0    up    counter (a bit)    >0    Block to be served

load    register (rate parameter)

down    Block was served

**FIG 5**

Block#0

supressure one clk

hold

backpressure

CellClk

counter (k bit)    0    up    counter (a bit)    >0    '&'    Block to be served

load    register (rate parameter)

down    Block was served

FIG 6

**Block**

suppressure one clk

hold

backpressure

CellClk

counter (k bit)          0          dec    reset

'&'          SB to be served

up

counter (a bit)    >0

load    register (rate parameter)

prio    dec    prio 1
                      search
                      prio 2
down          Block was served          search

Block idle

EP 0 935 907 B1